Europäisches Patentamt

European Patent Office

Office européen des brevets

(11) Publication number: **0 170 305**
**B1**

(12) EUROPEAN PATENT SPECIFICATION

(45) Date of publication of patent specification: 28.09.88

(21) Application number: 85200951.3

(22) Date of filing: 17.06.85

(51) Int. Cl.⁴: **C 08 G 18/42,** C 08 J 7/04,
C 09 D 3/72, B 60 K 15/02,
C 09 D 5/38

(54) Process for reducing the permeability of polyalkene layers to hydrocarbons.

(30) Priority: 19.06.84 NL 8401942

(43) Date of publication of application:
05.02.86 Bulletin 86/06

(45) Publication of the grant of the patent:
28.09.88 Bulletin 88/39

(84) Designated Contracting States:
BE DE FR GB NL

(56) References cited:
FR-A-1 243 431
FR-A-2 162 659
FR-A-2 314 232
GB-A-2 071 522

(73) Proprietor: STAMICARBON B.V.
Mijnweg 1
NL-6167 AC Geleen (NL)

(72) Inventor: Le Doux, Georges Fernand Joseph
St. Bernardusstraat 14
NL-6211 HL Maastricht (NL)
Inventor: Kwakman, Laurens Hendricus
Krammer 27
NL-8032 EJ Zwolle (NL)
Inventor: Kaptijn, Wilhelm Hendrik
Wijhezicht 46
NL-8131 DL Wijhe (NL)

Courier Press, Leamington Spa, England.

EP 0 170 305 B1

## Description

The invention relates to a process for reducing the permeability of a polyalkene layer to liquid and gaseous hydrocarbons by adhering to the polyalkene layer a two-component polyurethane lacquer composed of a polyester polyol and a prepolymer of an aromatic diisocyanate.

Such a process is known from DE—A—3009412. In that process the surface to be provided with the lacquer is roughened in advance mechanically or chemically in order to promote the adhesion.

It has been found that, for instance, petrol tanks produced from polyethylene and provided with a coat of lacquer in the manner described in DE—A—3009412 do at first indeed show a reduced permeability to hydrocarbons, but after a number of temperature fluctuations between +100°C and −40°C on petrol-saturated test specimens an increased permeability is shown again. This phenomenon might be attributed to the polyurethane resin or to the adhesion between the coat of lacquer and the substrate or to a combination of the two.

The object of the invention is to provide a process for reducing the permeability of a polyalkene layer preferably made of high-density polyethylene, to liquid and gaseous hydrocarbons by coating the polyalkene layer which layer preferably forms part of a container or pipe with a polyurethane lacquer which, compared with the process known in the art, produces an improved result in terms of permeability even after a great many temperature fluctuations.

This has been achieved by choosing as the polyester polyol component of the lacquer the reaction product of an esterification of a dicarboxylic acid, preferably an aromatic discarboxylic acid, more preferably isophthalic acid, and an excess of a trivalent alcohol, preferably trimethylolpropane, followed by a ring-opening polymerization of a lactone, preferably caprolactone, and by subjecting the surface of the polyalkene layer to be provided with the lacquer to an oxidative treatment.

The oxidative treatment applied preferably consists in flaming. The fact is that with this kind of lacquer this method has been found to produce very favourable results. The application of an intermediate layer (primer) improving the adhesion may result in an improvement of the whole system.

In all likelihood the lactone plays a decisive part in the chosen polyester polyol, which may be due to the high functionality (number of OH groups available) in the polyester polyol, so that a high degree of crosslinking can be achieved.

It is assumed that both the special polyester polyol component of the lacquer and the exceptionally good adhesion of the lacquer to the oxidized substrate occuring in combination with it produce the results shown in the example below.

## Example I

One-litre bottles weighing 50 g produced by blow moulding from high-density polyethylene (STAMYLAN® 6761 of DSM) are subjected externally by flaming to an oxidative treatment and are successively provided externally by spraying with a coat of lacquer about 50 µm thick. The lacquer to be sprayed on consists of a mixture of a prepolymer of a polyol and an aromatic diisocyanate (URADUR® P 49 of DSM Resins) and the reaction product of an esterification of isophthalic acid and trimethylol propane, $[CH_3 \, CH_2 \, C \, (CH_2OH)_3]$, and the subsequent ring-opening polymerization of monomeric caprolactone (URALAC® 331 of DSM Resins). The bottles are subsequently dried at a temperature of 100°C for 30 minutes.

After this treatment the bottles are filled to 50% of their capacity with a test petrol CEC RF-01 according to DIN 70030 Teil 1 and sealed airtight. Non-treated bottles, too, are filled with this test petrol to 50% of their capacity. The treated and non-treated bottles are stored for 120 days at 20°C. After that the average percentage of the loss in weight of the petrol of the treated and non-treated bottles is determined. It is found that the bottles treated according to the invention show a loss in weight of about 5%, whereas the non-treated bottles show a loss in weight of about 32%.

The improvement of the treated bottles, more than sixfold according to the above test, constitutes a result that cannot be reached with the process known so far. Probably the special polyester polyol component of the lacquer plays a double role in the realization of this result, in which not only the poor permeability of the applied lacquer as such, but also the adhesion to the flamed polyethylene surface may be important. The fact is that tests in which bottles treated according to the invention are subjected to a great many cold-heat fluctuations referred to above have been found not to shown any appreciable change in the adhesion between lacquer and substrate, which is unlike the processes known in the art in which the coat of lacquer is found to become detached. Neither is any appreciable reduction of the adhesion observed if the bottles treated according to the invention are subjected to the hot water test for three months. This test, which is known to be a test method having a very rigorously unfavourable effect on the adhesion, comprises the immersion of a test specimen in water of 80°C for a certain length of time.

The process can yet be improved by adding a pigment such as aluminium powder or carbon black as shown by examples II and III below.

## Example II

The process of example I is repeated. The difference is that aluminium powder is added to the polyester polyol component in an amount of 14.2 g to 100 g dry binding agent.

After 120 days the loss in the weight of the test petrol is found to be less than 4%.

Example III

The process of example I is repeated. The difference is that carbon black is added to the polyester polyol component in an amount of 9.9 g to 100 g dry binding agent. After 120 days it is found that the loss in the weight of the test petrol is less than about 1% (wt).

## Claims

1. Process for reducing the permeability of a polyalkene layer to liquid and gaseous hydrocarbons by adhering to the polyalkene layer a two-component polyurethane lacquer composed of a polyester polyol and a prepolymer of an aromatic diisocyanate, characterized in that as the polyester polyol component of the lacquer a reaction product is chosen of an esterification of a dicarboxylic acid and an excess of a trivalent alcohol followed by a ring-opening polymerization of a lactone and the surface of the polyalkene layer to be provided with the lacquer is subjected to an oxidative treatment.

2. Process according to claim 1, characterized in that the oxidative treatment consists of flaming.

3. Process according to claim 1 or 2, characterized in that the dicarboxylic acid is an aromatic dicarboxylic acid.

4. Process according to claim 3, characterized in that the aromatic dicarboxylic acid is isophthalic acid.

5. Process according to any one of claims 1—4, characterized in that the trivalent alcohol is trimethylol propane.

6. Process according to any one of claims 1—5, characterized in that the lactone is caprolactone.

7. Process according to any one of claims 1—6, characterized in that aluminium powder is added to the polyester polyol component.

8. Process according to any one of claims 1—6, characterized in that carbon black is added to the polyester polyol component.

9. Process according to any one of claims 1—8, characterized in that the polyalkene layer to be treated is high-density polyethylene.

10. Process according to any one of claims 1—9, characterized in that an intermediate layer is applied improving the adhesion.

11. Process according to any one of claims 1—10, characterized in that the polyalkene layer forms part of a container or pipe.

## Patentansprüche

1. Verfahren zur Verringerung der Durchlässigkeit einer Polyalkenschicht für flüssage und gasförmige Kohlenwasserstoffe durch Anhaften eines Zweikomponenten-Polyurethanlackes bestehend aus einem Polyesterpolyol und einem Präpolymer eines aromatischen Diisocyanats an die Polyalkenschicht, dadurch gekennzeichnet, daß als Polyesterpolyolkomponente des Lacks ein Reaktionsprodukt einer Veresterung einer Dicarbonsäure und eines überschusses eines dreiwertigen Alkohols gefolgt von einer Ringöffnungspolymerisation eines Lactons gewählt wird und die mit dem Lack zu versehende Oberfläche der Polyalkenschicht einer Oxidationsbehandlung unterworfen wird.

2. Verfahren nach Anspruch 1, dadurch gekennzeichnet, daß die Oxidationsbehandlung im Glühen besteht.

3. Verfahren nach Anspruch 1 oder 2, dadurch gekennzeichnet, daß die Dicarbonsäure eine aromatische Dicarbonsäure ist.

4. Verfahren nach Anspruch 3, dadurch gekennzeichnet, daß die aromatische Dicarbonsäure Isophthalsäure ist.

5. Verfahren nach einem der Ansprüche 1 bis 4, dadurch gekennzeichnet, daß der dreiwertige Alkohol Trimethylolpropan ist.

6. Verfahren nach einem der Ansprüche 1 bis 5, dadurch gekennzeichnet, daß das Lacton Caprolacton ist.

7. Verfahren nach einem der Ansprüche 1 bis 6, dadurch gekennzeichnet, daß der Polyesterpolyolkomponente Aluminiumpulver zugesetzt wird.

8. Verfahren nach einem der Ansprüche 1 bis 6, dadurch gekennzeichnet, daß der Polyesterpolyolkomponente Ruß zugesetzt wird.

9. Verfahren nach einem der Ansprüche 1 bis 8, dadurch gekennzeichnet, daß die zu behandelnde Polyalkenschicht hochdichtes Polyäthylen ist.

10. Verfahren nach einem der Ansprüche 1 bis 9, dadurch gekennzeichnet, daß eine die Adhäsion verbessernde Zwischenschicht aufgebracht wird.

11. Verfahren nach einem der Ansprüche 1 bis 10, dadurch gekennzeichnet, daß die Polyalkenschicht Teil eines Behälters oder Rohres bildet.

## Revendications

1. Procédé de réduction de la perméabilité d'une couche de polyalcène aux hydrocarbures liquides et gazeux en faisant adhérer à la couche de polyalcène un vernis de polyuréthane à deux composants comprenant un polyester-polyol et un prépolymère d'un diisocyanate aromatique, caractérisé en ce qu'à titre de composant polyester-polyol du vernis, on choisit un produit de réaction d'une estérification d'un acide dicarboxylique et d'un excès d'un alcool trivalent, qu'on fait suivre d'une polymérisation d'ouverture de noyau d'une lactone et on soumet la surface de la couche de polyalcène devant recevoir le vernis à un traitement oxydant.

2. Procédé selon la revendication 1, caractérisé en ce que le traitement oxydant est un traitement à la flamme.

3. Procédé selon la revendication 1 ou 2, caractérisé en ce que l'acide dicarboxylique est un acide dicarboxylique aromatique.

4. Procédé selon la revendication 3, caractérisé en ce que l'acide dicarboxylique aromatique est l'acide isophtalique.

5. Procédé selon l'une quelconque des revendications 1 à 4, caractérisé en ce que l'alcool trivalent est le triméthylol-propane.

6. Procédé selon l'une quelconque des revendications 1 à 5, caractérisé en ce que la lactone est la caprolactone.

7. Procédé selon l'une quelconque des revendications 1 à 6, caractérisé en ce qu'on ajoute au composant polyester-polyol une poudre d'aluminium.

8. Procédé selon l'une quelconque des revendications 1 à 6, caractérisé en ce qu'on ajoute au composant polyester-polyol du noir de carbone.

9. Procédé selon l'une quelconque des revendications 1 à 8, caractérisé en ce que la couche de polyalcène à traiter est un polyéthylène de haute densité.

10. Procédé selon l'une quelconque des revendications 1 à 9, caractérisé en ce qu'on applique une couche intermédiaire pour améliorer l'adhérence.

11. Procédé selon l'une quelconque des revendications 1 à 10, caractérisé en ce que la couche de polyalcène fait partie d'un récipient ou d'une conduite.